# EUROPEAN PATENT APPLICATION

(11) **EP 1 693 914 A1**
(43) Date of publication of application: **23.08.2006**
(21) Application number: 05257697.2
(22) Date of filing: 15.12.2005
(51) Int. Cl.: H01M 8/02, H01M 8/12, H01M 8/24

(54) **Methods of sealing solid oxide fuel cells**

(30) Priority: 22.02.2005 US 61648
(71) Applicant: GENERAL ELECTRIC COMPANY, Schenectady, NY 12345 (US)
(72) Inventor: Qu, Xiwang, Torrance, California 90503 (US); Weng, Dacong, Rancho Palos Verders, CA 90275 (US); Guan, Jie, Torrance, CA 90503 (US)
(74) Representative: Goode, Ian Roy

(57) **Abstract**

To form the solid oxide fuel cell (10), porous, compliant and conducting anode and cathode buffers (22, 24) are disposed between the cell and anode and cathode flow fields (12, 14) respectively. Marginal gaps (30) between the anode and cathode flow fields and margins of the cell are formed in excess of the thickness of glass based seal tape (32) disposed between the flow field margins and the cell margins. Upon compressing the flow fields and thus the buffer layers, the seal tapes are engaged by the flow fields and cell margins. Heat is applied to reach seal working temperatures to melt the glass-based seal which, upon cooling, solidifies or hardens to form hermetic seals along the fuel cell margins.

## Description

The present invention relates to methods of sealing solid oxide fuel cells using glass based seal tape to seal between cell and anode/cathode flow fields and particularly relates to methods for sealing the fuel cells to minimize or eliminate seal leakage, debonding of seals from the flow fields and/or cells and cell cracking thereby facilitating maintenance of cell integrity during fuel cell operation.

In a planar solid oxide fuel cell (SOFC) stack, sealing between the cell and the anode and cathode flow fields is critical to prevent fuel and oxidant from leaking and mixing. The criticality of sealing in solid oxide fuel cells is well known since hermetic seals, often between ceramic and metal, at high temperatures and during thermal cycling are difficult to obtain and maintain. Close thermal expansion coefficient match and chemical compatibility between these materials are required.

Two major approaches are typically utilized in solid oxide fuel cell sealing practice, namely glass ceramic-based chemical seals and gasket-based mechanical compressive seals. The mechanical compressive seals require a high degree of surface preparation and finish and high-pressure load capacity. A complete hermetic seal oftentimes cannot be achieved due to the flatness limitation of high temperature sintered ceramic cell. Also, contact stresses can readily cause cell fracture during assembly and thermal cycling in SOFC stack operation. Representative examples of mechanical type seals are described and illustrated in U.S. publication No. 2002/0195778, 2003/0203267 and 2003/0215689. Additional examples are set forth in WO 2003/036745 A2, WO 2003/032420 A2 and WO/0217416 A2.

Glass- and glass ceramic-based seals have very good wetting and bonding properties to both ceramic and metals and are capable of forming hermetic seals. Representative examples of this type of sealing for solid oxide fuel cells include U.S. Patent Nos. 6,291,092, 6,271,158, 6,541,146 and 6,656,625. Additionally EP Publication No. 1211230 A1 discloses a glass matrix composition.

In practice, a standoff issue between rigid interconnect plates and glass seals during seal forming and thermal cycling, i.e. differential thermal expansion and shrinkage, often causes seal surface de-bonding or cell cracking and becomes a formidable barrier to forming and maintaining the necessary glass-based seal. Accordingly there has developed a need to overcome the foregoing and other problems, particularly issues of standoff and seal debonding, in order to form and maintain hermetic seals and maintain the cell and seal integrity throughout the life of the fuel cell operation.

In a preferred embodiment of the present invention there is provided a method of sealing margins of solid oxide fuel cell modules having anode and cathode flow fields on opposite faces of a cell comprising the steps of: (a) providing a seal material along margins of the cell and between margins of the anode and cathode flow fields; (b) disposing anode and cathode buffer layers of a compliant, porous and conductive material between the cell and the respective anode and cathode flow fields; (c) compressing the fuel cell module to compress the seal material and buffer layers between the cell and the anode and cathode flow fields; (d) heating the seal material while the anode and cathode flow field margins are compressed; and (e) solidifying or hardening the seal material to hermetically seal the margins of the fuel cell.

In a further preferred embodiment of the present invention there is provided a method of sealing margins of solid oxide fuel cell modules having anode and cathode flow fields on opposite faces of a solid electrolyte cell comprising the steps of: (a) providing glass-based seal tapes between margins of the cell and the anode and cathode flow fields; (b) disposing anode and cathode buffer layers of a compliant, porous and conductive material between the cell and the respective anode and cathode flow fields, the buffer layers having a thickness in excess of the respective thicknesses of the glass-based seal tapes; (c) compressing the fuel cell module to engage the margins of the anode and cathode flow fields with the seal tapes; (d) heating the seal tapes to a molten state while the cell and anode and cathode flow field margins are engaged to wet the cell and anode and cathode flow field margins; and (e) solidifying or hardening the seal glass to hermetically seal the margins of the fuel cell.

Embodiments of the invention will now be described, by way of example, with reference to the accompanying drawings, in which:
FIGURES 1-3 are schematic cross sectional views of a solid oxide fuel cell illustrating a preferred process for forming a solid oxide fuel cell seal, Figure 3 illustrating a completed cell;
FIGURES 4-6 are views similar to Figures 1-3 illustrating various forms of a seal configuration about the margins of the cell.

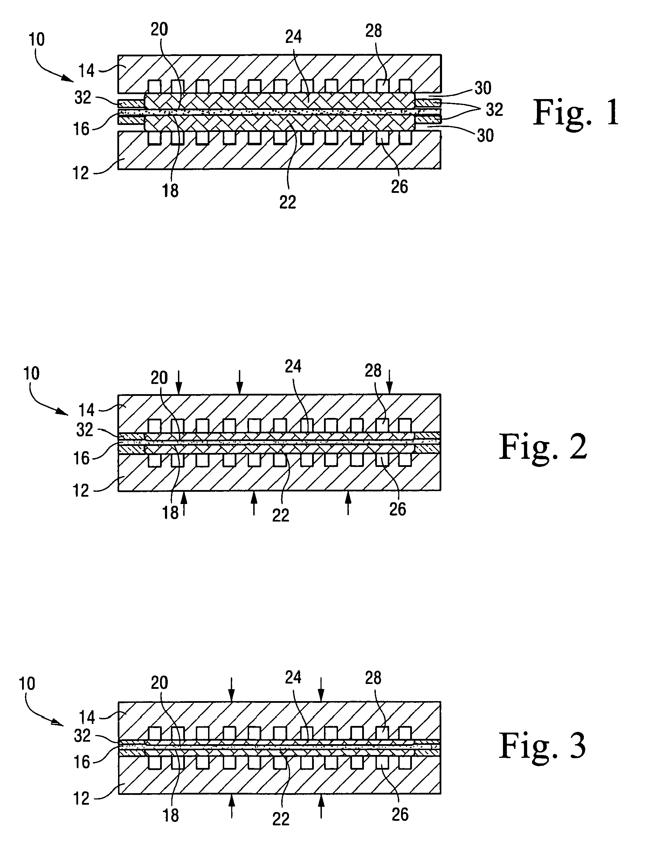

Referring to the drawings, a solid oxide fuel cell module in final assembly is generally designated 10 and illustrated in Figures 1-6. Typically, the fuel cell modules 10 are stacked to form a multiple fuel cell assembly. Each fuel cell module 10 includes an anode flow field 12 and a cathode flow field 14 on respective opposite sides of a solid cell 16. The cell 16 consists of an electrolyte layer sandwiched by anode layer 18 facing towards the anode flow field 12 and cathode layer 20 facing towards the cathode flow field 14. An anode buffer layer 22 is interposed between the anode layer 18 and the anode flow field 12. A cathode buffer layer 24 is interposed between the cathode layer 20 and the cathode flow field 14. The anode and cathode flow fields include fuel gas channels 26 and oxidant channels 28. The fuel gas may take the form of a substantial number of different fuels, for example natural gas, methane, hydrogen or the like. The oxidant may be oxygen or air. The anode and cathode buffers 22 and 24, respectively, are formed of conductive, porous and compliant material in a preferred embodiment of the present invention.

The fuel and oxidant supplied to the anode layer 18 and cathode layer 20, respectively, provide known reactions causing a voltage from which a current may be collected. It will be appreciated that the fuel cells may have any one of a variety of shapes, for example square, rectangular and circular, typically planar, and that these solid oxide fuel cell modules typically need to have seals about their margins to prevent undesired fuel and oxidant from leaking and mixing.

In accordance with a preferred embodiment, the present invention provides a marginal seal which eliminates the standoff issue and risks of seal debonding and cell cracking and achieves a robust hermetic seal for fuel cell operation. Referring to Figure 1, the anode and cathode buffer layers 22 and 24 are provided in the form of conductive/porous compliant felts or foams, respectively, at the interface between the anode layer 18 and anode flow field 12 and at the interface of the cathode layer 20 and the cathode flow field 14. Glass-based seal tape 32 is provided in the gap 30 between the flow fields and the cell 16. As illustrated in Figure 1, glass-based tapes 32 are provided about the margins and on opposite sides of the cell. Each tape 32 has a thickness less than the thickness of the associated anode or cathode buffer layers 22 and 24. Consequently in the initial assembly of the fuel cell module 10, the gaps between the respective flow fields 12 and 14 and the cell 16 are larger than the seal tape thicknesses.

Referring to Figure 2, a compressive load is placed on the solid oxide fuel cell module as indicated by the arrows, compressing both of the anode and cathode buffer layers. The porous compliant buffer layers 22, 24 are thus compressed until the flow fields 12, 14 engage the seal tapes 32 and the compressive load is partially supported by the seal tapes. That is, after compression, each buffer layer thickness is the same as the thickness of the associated seal tape on the corresponding side of the cell 16. Heat is then applied with a proper ramp schedule to reach a desired working temperature in the range of 600-1000°C at which temperature the seals melt and wet both surfaces of the cell and flow fields. During the heating process, the binder in the seal glass tape is first burned off, and as the compressive load is continuously applied, the gap between the cell 16 and the anode and cathode flow fields decreases as the melted seal glass loses its supporting force due to reduced viscosity. The melted seal glass fills the entire gaps between margins of the cell and the anode and cathode flow fields, respectively. The temperature is then reduced to the fuel cell operating temperature, which may range from 50-200°C below the seal working temperature of 600-1000°C. By reducing the temperature, the molten glass solidifies or hardens and affords a strong hermetic seal between the cell 16 and the anode and cathode flow fields 12, 14, as illustrated in Figure 3. The seal tape and buffer layer thicknesses are substantially identical and the standoff issue during seal forming and fuel cell thermal cycling is avoided. Simultaneously, the cell 16 is supported along both sides by compliant porous buffer layers which preclude the cell from stress-related cracks during thermal cycling without blocking the gas diffusion to the cell surface.

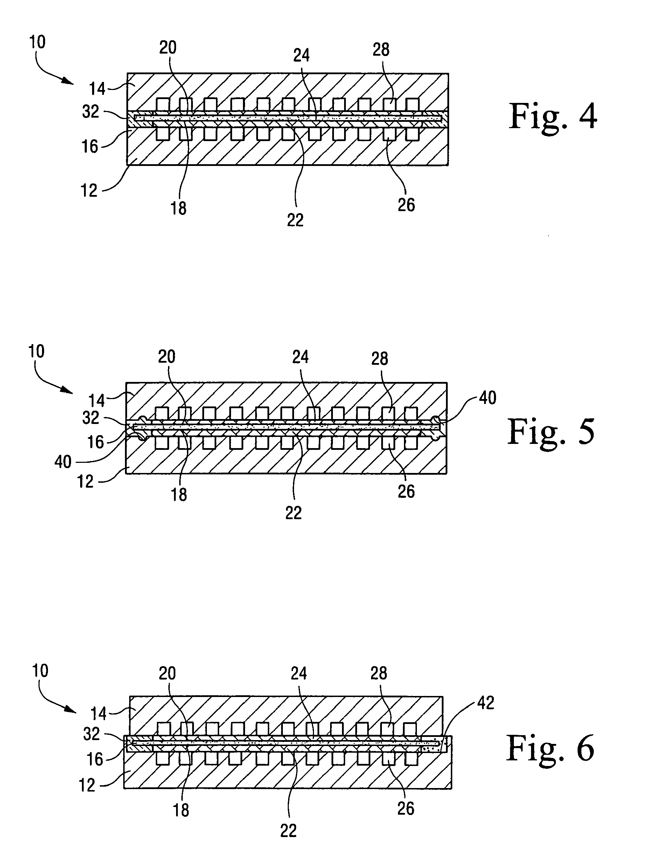

Referring to Figure 4, the margins of the cell 16 may be inset from the margins of the anode and cathode flow fields. With glass seal tapes being applied on opposite margins of the cell 16, and the resulting compression as noted above, the overlapping molten glass fills in between the margins of the anode and cathode flow fields externally of the edges of the cell as illustrated.

In Figure 5, the margins of the anode and cathode flow field in opposition to the seal tapes have grooves 40 formed on their surfaces. Thus the glass seal during melting is precluded from relocating and the glass seal retained in the grooves enhances the bonding strength to the interconnect surface.

Figure 6 discloses the anode interconnect with recesses 42 along the margin and a wider margin than the cathode flow field. In this manner, the recesses maintain in place the molten glass seal material during melting.

With respect to the materials of the various constituent elements, the cell 16 may be formed of a yttria-stabilized zirconia (YSZ) electrolyte with La₁₋ₓSrₓMnO₃ (LSM) cathode and YSZ/NiO cement anode sintered at each side. The cathode buffer layer 24, which also serves as conducting and mass transfer agent between the cell cathode 20 and cathode flow field 14, can be ceramic felt made of conductive oxides, such as La₁₋ₓSrₓMnO₃, La₁₋ₓSrₓCoO₃, La₁₋ₓSrₓFeO₃, La₁₋ₓSrₓCo_{1-y}Fe_{y}O₃, or metal felt made of oxidation resistant metals and alloys, such as certain stainless steels, silver, gold, platinum, palladium, fecralloy, Ebrite®, Inconnel, etc., depending on the operation temperature. The anode buffer layer 22, which also serves as conducting and mass transfer agent between cell anode 18 and anode flow field 12, can be made from a relatively larger selection of metal foam or felt, such as copper, silver, nickel, stainless steel, alloys and conducting oxides. The seal glass can be any glass or glass ceramic with melting point in the range of 600-1000°C, and with CTE closely matched to the cell and metal interconnect, preferably in the range of 9~13x10⁻⁶/K, such as soda lime glass, boron silicate glass and Macor glass ceramic, etc. The glass seal tape can be made by tape casting or rolling with organic binder added. The fuel cell operation temperature is preferably 50~200°C below the seal working temperature to ensure the glass seal is solidified or hardened and can withstand certain across-seal pressure difference.

It will be appreciated that the flow channels for the fuel and oxidant are illustrated as parallel to one another. However, the flow channels can be at right angles to one another or any other different orientation as desired.

## Claims

1. A method of sealing margins of solid oxide fuel cell modules (10) having anode and cathode flow fields (12, 14) on opposite faces of a solid electrolyte cell comprising the steps of:
(a) providing a seal material (32) along margins of the fuel cell and between margins of the anode and cathode flow fields (12, 14);
(b) disposing anode and cathode buffer layers (18, 20) of a compliant, porous and conductive material between the cell and the respective anode and cathode flow fields;
(c) compressing the fuel cell module to compress the buffer layers and seal material between the cells and the anode and cathode flow fields;
(d) heating the seal material while the anode and cathode flow fields are compressed; and
(e) solidifying or hardening the seal material to hermetically seal the margins of the fuel cell.

2. A method according to claim 1, wherein step (d) includes heating the seal material (32) to a molten state.

3. A method according to claim 2 including heating the seal material (32) to a seal material working temperature above 600°C.

4. A method according to claim 3 including reducing the temperature of the seal material by 50-200°C below the seal material (32) working temperature.

5. A method according to claim 1 wherein step (b) includes disposing anode and cathode buffer layers (18, 20) having a thickness in excess of the thickness of the seal material between the margins of the anode and cathode flow fields to form an initial gap (30) between the seal material and at least one of anode and cathode flow fields prior to performing step (c).

6. A method of sealing margins of solid oxide fuel cell modules (10) having anode and cathode flow fields (12, 14) on opposite faces of a solid electrolyte cell comprising the steps of:
(a) providing glass based seal tapes (32) between margins of the cell and between margins of the anode and cathode flow fields;
(b) disposing anode and cathode buffer layers (22, 24) of a compliant, porous and conductive material between the cell and the respective anode and cathode flow fields, said buffer layers having a thickness in excess of the respective thicknesses of the glass based seal tapes;
(c) compressing the fuel cell module (10) to engage the margins of the anode and cathode flow fields with the seal tapes;
(d) heating the seal tapes to a molten state while the anode and cathode flow field margins are engaged to wet the anode and cathode flow field margins; and
(e) solidifying or hardening the seal materials to hermetically seal the margins of the fuel cell.

7. A method according to claim 6 including providing the seal tape (32) between each of the opposite sides of the cell margins and the respective anode and cathode flow fields (12, 14), and initially forming a gap (30) between margins of the cell and the respective anode and cathode flow fields having a depth greater than the thickness of the seal tape provided along the margins between each of the opposite sides of the cell and the respective anode and cathode flow fields.

8. A method according to claim 6 wherein step (e) includes reducing the temperature of the seal material to a temperature below the temperature of the seal tape in its molten state to solidify or harden the seal material.

9. A method according to claim 6 wherein step (d) includes heating the seal tape to a seal working temperature above 600°C.

10. A method according to claim 9 including reducing the temperature of the seal material by 50-200°C below the seal working temperature.
